# DEMANDE DE BREVET EUROPEEN

(11) **EP 1 849 697 A1**
(43) Date de publication de la demande: **31.10.2007**
(21) Numéro de dépôt: 07356054.2
(22) Date de dépôt: 23.04.2007
(51) Int. Cl.: B62K 11/14, B62J 6/02, B62J 39/00

(54) **Boîtier et ensemble prêts à monter pour motocyclette, motocyclette correspondante et son procédé de fabrication**

(30) Priorité: 24.04.2006 FR 0603619
(71) Demandeur: Engineering and More, 34150 Aniane (FR)
(72) Inventeur: Domergue, Joel Léon Robert, 34150 Aniane (FR)
(74) Mandataire: Schouller, Jean-Philippe

(57) **Abrégé**

Ce boîtier (1) comprend un corps creux dans lequel sont ménagés différents logements propres à recevoir des équipements de la motocyclette, en particulier une optique de phare avant (38) et/ou un afficheur (42) et/ou des clignotants (44), des premiers moyens (28) de fixation du corps creux (2) sur un premier emplacement de la fourche avant de la motocyclette, ainsi que des seconds moyens (30, 34, 36) de fixation du corps creux sur un second emplacement de la fourche avant de la motocyclette.

## Description

La présente invention concerne un boîtier d'un ensemble prêt à monter pour fourche avant de motocyclette, un ensemble prêt à monter comprenant un tel boîtier, une motocyclette équipée d'un tel ensemble, ainsi qu'un procédé de fabrication d'une telle motocyclette.

De façon classique, une motocyclette comporte un châssis monté sur des roues, auquel sont notamment associés un moteur, un siège ainsi qu'un ensemble de direction. Le châssis précité se compose entre autres d'une fourche avant, qui comporte deux tubes verticaux, à partir desquels s'étend le guidon de la motocyclette.

Cette dernière est en outre munie, dans sa partie avant, de différents équipements, notamment de type électrique, qu'il s'agit de rapporter sur le châssis. De tels équipements sont notamment une optique de phare avant, un afficheur assurant en particulier une fonction de tachymètre, ainsi que des clignotants. Ces différents équipements sont associés à des conducteurs électriques, qu'il convient de raccorder à la source centrale d'énergie du véhicule.

De façon classique, les équipements précités sont rapportés sur la fourche avant de façon séparée, au moyen de plusieurs organes de fixation, tels que des plaques. Ces dernières, qui sont elles-mêmes solidarisées sur les tubes verticaux de la fourche, assurent le montage de ces différents équipements.

Cette solution connue présente cependant certains inconvénients. En effet, le montage des équipements précités, sur la fourche avant de la motocyclette, se révèle relativement long à mettre en oeuvre, tout en s'accompagnant d'une certaine complexité.

Ceci étant précisé, l'invention vise à remédier aux différents inconvénients de l'art antérieur évoqués ci-dessus. Elle vise en particulier à proposer un agencement autorisant un montage et un démontage aisés et rapides des différents équipements évoqués ci-dessus, sur la fourche avant de la motocyclette.

A cet effet, elle a pour objet un boîtier d'un ensemble prêt à monter pour fourche avant de motocyclette, ce boîtier comprenant un corps creux dans lequel sont ménagés différents logements propres à recevoir des équipements, notamment électriques, de ladite motocyclette, en particulier une optique de phare avant et/ou un afficheur et/ou des clignotants, ce boîtier comprenant également des moyens de fixation du corps creux sur la fourche avant de la motocyclette.

Selon d'autres caractéristiques de l'invention :
- le corps creux est réalisé d'un seul tenant, en étant en particulier réalisé en une matière plastique, telle que du polyéthylène ;
- les moyens de fixation du corps creux sont propres à conférer un caractère amortissant à la fixation de ce corps creux par rapport à la fourche avant de la motocyclette ;
- ce boîtier comporte des premiers moyens de fixation du corps creux sur un premier emplacement de la fourche avant de la motocyclette, ainsi que des seconds moyens de fixation du corps creux sur un second emplacement de la fourche avant de la motocyclette ;
- les premiers moyens de fixation comprennent au moins un tampon amortisseur, réalisé en un matériau souple, qui est propre à être coincé sur au moins une plage de réception, formée sur la face supérieure du corps creux ;
- les seconds moyens de fixation comprennent une vis, s'étendant au travers d'une patte inférieure du corps creux, un contre écrou monté sur cette vis, ainsi qu'un ressort .interposé entre ce contre écrou et la paroi en regard de ladite patte.

L'invention a également pour objet un ensemble prêt à monter pour fourche avant de motocyclette, comprenant un boîtier tel que défini ci-dessus, ainsi que différents équipements, notamment électriques, de ladite motocyclette, en particulier une optique de phare avant et/ou un afficheur et/ou des clignotants, chacun desdits équipements étant reçu dans un logement de réception correspondant, ménagé dans le corps creux du boîtier.

Selon une autre caractéristique de l'invention, chaque équipement est pourvu d'un organe conducteur, alors qu'il est prévu un relais de connexion desdits organes conducteurs, ce relais étant pourvu d'un organe conducteur de sortie, s'étendant en dehors du corps creux.

L'invention a également pour objet une motocyclette comprenant une fourche, ainsi qu'un ensemble prêt à monter tel que défini ci-dessus, qui est monté sur la fourche avant. Selon d'autres caractéristiques de l'invention :
- la fourche avant comprend une traverse supérieure pourvue de deux plots, et chaque plot coopère avec une partie annulaire d'un tampon amortissant correspondant ;
- la fourche avant comprend une traverse inférieure dans laquelle est ménagé un taraudage, ladite vis étant vissée dans ce taraudage.

L'invention a enfin pour objet un procédé de fabrication de la motocyclette telle que définie ci-dessus, dans lequel on place chaque équipement dans un logement correspondant, de manière à former ledit ensemble prêt à monter, et on monte ledit ensemble sur la fourche avant de la motocyclette.

L'invention va être décrite ci-après, en référence aux dessins annexés, donnés uniquement à titre d'exemple non limitatif, dans lesquels :
- la figure 1 est une vue en perspective éclatée, illustrant un boîtier conforme à l'invention, ainsi que des accessoires qui lui sont associés ;
- la figure 2 est une vue de dessus, illustrant le boîtier de la figure 1 ;
- les figures 3 à 5 sont des vues respectivement en perspective, de côté et de face, illustrant un ensemble prêt à monter conforme à l'invention ; et
- les figures 6 et 7 sont des vues en perspective, illustrant sous deux angles différents le montage de cet ensemble sur une motocyclette.

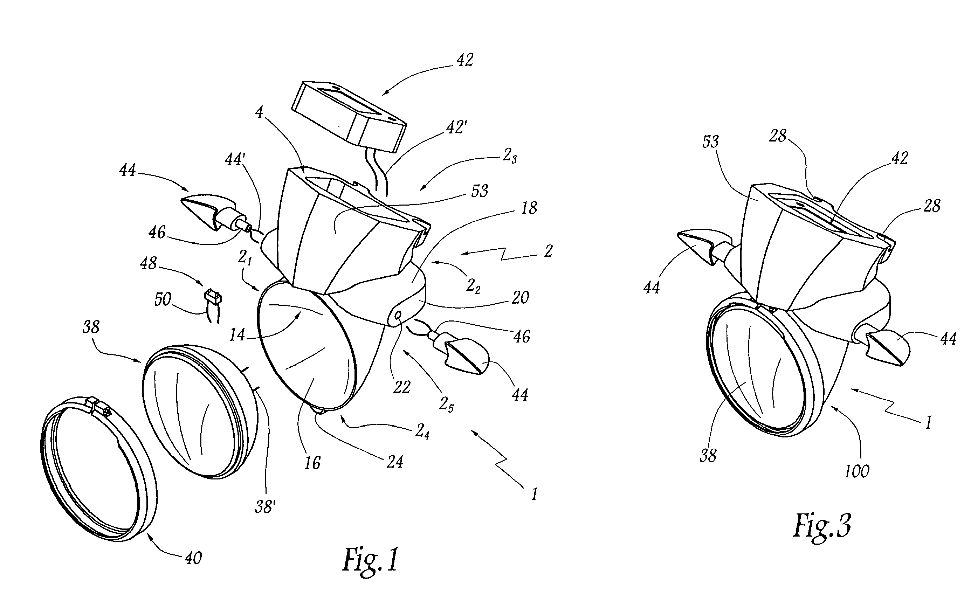

Le boîtier conforme à l'invention, illustré notamment sur les figures 1 et 2, est désigné dans son ensemble par la référence 1. Il se compose essentiellement d'un corps creux 2, réalisé d'un seul tenant, de façon avantageuse par moulage d'une matière plastique, telle que du polyéthylène.

En référence à sa position une fois monté sur la moto, on affecte les différentes faces de ce corps creux 2 des références suivantes : face avant 2₁, face arrière 2₂, face supérieure 2₃, face inférieure 2₄ et faces latérales 2₅. Vu de l'avant, le boîtier 1 présente une forme à peu près triangulaire.

La face supérieure 2₃ du corps creux 2 définit une bordure périphérique 4, dans laquelle est creusé un évidement central qui délimite un premier logement 6, destiné à la réception d'un afficheur comme on le verra dans ce qui suit. Une ouverture 8 est en outre ménagée dans la paroi inférieure de ce logement, de manière à permettre le passage d'éléments conducteurs, associés à l'afficheur précité.

La bordure 4 est prolongée, en direction de la face arrière 2₂, par deux crochets latéraux 10 qui définissent deux plages 12 de réception de tampons amortisseurs, comme on le verra dans ce qui suit. Ainsi, chaque plage 12 est bordée, au niveau de son côté latéral interne, par les parois des crochets 10, qui présentent sensiblement une forme semi-circulaire vues de dessus, afin d'assurer une fonction de butée. En revanche, à l'opposé de ces parois, à savoir dans une direction latérale externe, les plages 12 sont ouvertes.

L'ouverture 8 précitée débouche dans un logement principal 14, ménagé à l'intérieur du corps creux 2 formant le boîtier 1. La face avant 2₁ est en outre creusée d' un orifice 16, sensiblement circulaire, qui débouche également dans le logement principal 14. Cet orifice 16 est destiné à la réception d'une optique de phare comme on le verra dans ce qui suit.

Les deux faces latérales 2₅ définissent des saillies 18, qui sont tronquées par des méplats d'extrémité 20, s'étendant verticalement lorsque le boîtier est disposé sur la motocyclette. Chaque méplat 20 est creusé d'un trou 22, permettant l'accrochage d'un clignotant comme on le verra dans ce qui suit. Enfin, au niveau de sa face inférieure 2₄, le corps creux 2 est pourvu d'une patte creuse 24, dont les parois respectivement avant et arrière sont creusées d'orifices 6, s'étendant en regard l'un de l'autre.

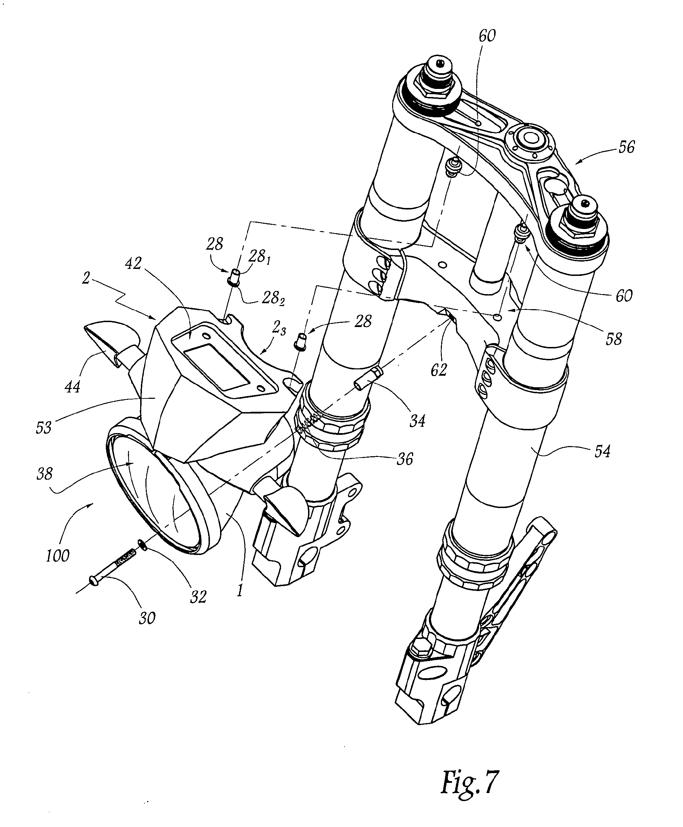

Le boîtier 1 est associé à différents éléments, permettant sa fixation sur le châssis de la motocyclette. Ces éléments de fixation comportent tout d'abord deux tampons 28, réalisés en un matériau amortissant, tel qu'un élastomère. Comme le montre la figure 7, chaque tampon 28 comprend une tige annulaire 28₁, prolongée par une tête cylindrique 28₂, de plus grande dimension transversale. On notera que le diamètre de cette tête est voisin de celui des parois semi-circulaires bordant les plages 12, ménagées sur la face avant 2₁ du boîtier.

Toujours en référence à la figure 7, les éléments de fixation précités comprennent également une vis 30, dont la tête est propre à coopérer avec une rondelle 32. De plus, un contre écrou 34 est propre à être vissé sur le corps de cette vis 30, avec interposition d'un ressort 36.

Différents équipements électriques peuvent être reçus dans le boîtier 1, de manière à former un ensemble prêt à monter conforme à l'invention. Il s'agit tout d'abord d'une optique de phare avant 38, de type connu en soi. Cette optique est propre à être introduite dans l'orifice 16, tout en étant fixée par rapport aux parois de cet orifice grâce à un collier de serrage 40, de type classique.

De plus, un afficheur 42, regroupant notamment les fonctions de tachymètre et de compte tours, peut être reçu dans le logement supérieur 6. Deux clignotants 44 peuvent être introduits, par l'intermédiaire de pions 46, dans les trous latéraux 22 du boîtier 1. Enfin, la face avant 2₁ du corps creux 2 peut en outre être recouverte, au moins partiellement, d'un élément décoratif 53, représenté de façon schématique.

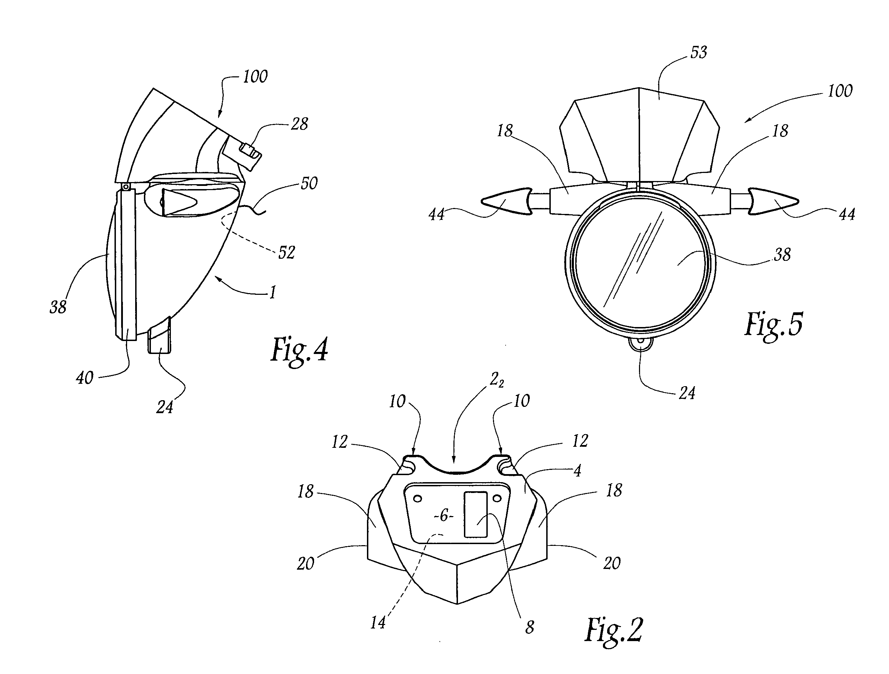

Le phare 38, l'afficheur 42 et les clignotants 44 sont associés à des organes conducteurs, représentés de façon schématique et affectés des références respectives 38', 42' et 44'. Ces différents organes conducteurs sont propres à être connectés à un relais 48, représenté également de façon schématique. Ce relais 48 est lui-même équipé d'un organe conducteur de sortie 50, qui s'étend en service hors du boîtier, à travers un trou 52 ménagé dans la face arrière de celui-ci (figure 4).

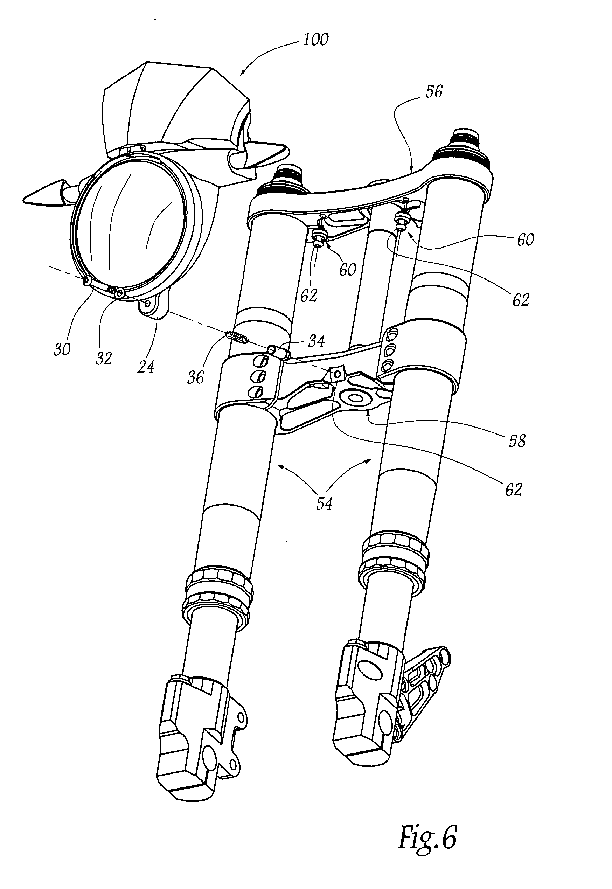

Le boîtier 1, ainsi que ces différents équipements électriques 38, 42 et 44, peuvent être montés sur une fourche avant de motocyclette, représentée de façon partielle sur les figures 6 et 7. On retrouve deux tubes verticaux 54, qui sont reliés de manière classique par deux traverses, respectivement supérieure 56 et inférieure 58.

La traverse supérieure 56 reçoit deux vis 60, disposées de part et d'autre d'un axe longitudinal médian de la motocyclette. De la sorte, la tête 62 de ces vis fait saillie vers le bas par rapport au corps de cette traverse, de manière à coopérer avec les tampons 28 comme on le verra dans ce qui suit.

En outre, la traverse inférieure 58 est creusée, sur sa face avant, d'un taraudage 62. Ce dernier est ménagé de façon oblique, à savoir que, de l'avant vers l'arrière de la motocyclette, il s'étend de bas en haut.

L'assemblage de l'ensemble prêt à monter conforme à l'invention, ainsi que son montage sur la fourche avant de la motocyclette, vont maintenant être décrits dans ce qui suit.

Il s'agit tout d'abord d'introduire les différents équipements électriques dans leur logement correspondant, ménagés dans le boîtier 1. Ainsi, on fixe l'optique de phare 38 par rapport aux parois de l'orifice 16, grâce au collier 40. On dispose également l'afficheur 42 dans le logement supérieur 6.

Enfin, on introduit chaque pion 46 d'un clignotant respectif 44 dans un trou correspondant 22. On connecte en outre les différents organes conducteurs 38', 42' et 44' au relais 48, en faisant ressortir l'organe conducteur de sortie 50 de ce dernier au travers du trou 52.

De plus, on place chaque tampon 28 sur sa plage de réception 12 correspondante. A cet effet, on coince chaque tête 28₂ contre les parois des crochets 10, alors que chaque tige 28₁ fait saillie vers le haut. A titre de variante, on peut prévoir un unique tampon qui, par sa forme et/ou ses dimensions, assure un caractère isostatique à la fixation du boîtier.

Enfin, on fait pénétrer la vis 30 à travers les orifices 26 de la patte inférieure 24, en disposant la tête de cette vis 30 contre la face avant de cette patte, avec interposition de la rondelle 32. En outre, on place le contre écrou 34 sur cette vis 30, le ressort 36 étant interposé entre celui-ci et la face arrière de la patte 24.

Une fois ces opérations effectuées, on dispose d'un ensemble prêt à monter. Ce dernier, qui est affecté de la référence 100 sur les figures 3 à 7, est propre à être solidarisé sur la fourche avant de la motocyclette.

A cet effet, on place la face supérieure 2₃ du corps creux 2 au voisinage de la traverse supérieure 56, légèrement au-dessous de celle-ci. Puis, on remonte le boîtier 1, de manière que la tige annulaire 28₁ de chaque tampon 28 vienne coiffer la tête des vis 60, faisant saillie vers le bas de cette traverse supérieure 56. L'ensemble 100 est alors maintenu par rapport à la fourche avant, au niveau de son extrémité supérieure.

On le fait alors basculer vers l'arrière de la motocyclette, jusqu'à ce que l'extrémité de la vis 30 vienne au voisinage du taraudage 62, ménagé dans la traverse intérieure 58. Il s'agit alors de visser cette vis 30 dans ce taraudage 62, de manière à assurer la fixation de l'ensemble prêt à monter par rapport à la fourche. La sortie électrique 50 est enfin connectée à une source centrale d'énergie de la motocyclette, telle une batterie.

On notera que, selon l'amplitude du vissage de la vis 30 dans le taraudage 62, l'optique de phare 38 est plus ou moins inclinée par rapport à une direction horizontale. On conçoit donc que le réglage de la position de cette optique peut être assuré de façon très simple, moyennant une simple manipulation de cette vis 30. Enfin, cette optique de phare peut être maintenue en position de manière fiable, en vissant le contre écrou 34 contre la paroi en regard de la traverse inférieure 58.

Lors de l'utilisation de la motocyclette, les différents éléments de fixation, à savoir notamment les tampons 28 et la vis 30, autorisent un maintien sûr de l'ensemble 100 par rapport à la fourche. Par ailleurs, ces éléments de fixation assurent une fonction supplémentaire d'amortissement, en particulier à l'égard des vibrations subies par la motocyclette. Ce caractère amortissant est conféré par la nature souple des tampons 28, d'une part, et par la présence du ressort 36 d'autre part.

L'invention permet de réaliser les objectifs précédemment mentionnés.

En effet, elle assure un montage particulièrement rapide et simple à mettre en oeuvre, des différents équipements susceptibles d'être associés à la fourche avant d'une motocyclette. Ainsi, conformément à l'invention, le boîtier peut être pourvu, au préalable, avec les différents équipements précités, puis être monté en une seule opération sur la motocyclette.

On notera que cette rapidité concerne, non seulement le montage, mais également le démontage de cet ensemble. On conçoit donc que, grâce à l'invention, la fabrication mais également la maintenance de la motocyclette sont notablement plus simples que dans l'état de la technique.

On notera en outre que la forme compacte du boîtier permet de ménager, entre celui-ci et les parties supérieures des tiges de fourche, des passages d'air assurant l'alimentation du moteur en air comburant.

## Revendications

1. Boîtier (1) d'un ensemble prêt à monter (100) pour fourche avant de motocyclette, ce boîtier comprenant un corps creux (2) dans lequel sont ménagés différents logements (6, 14, 22) propres à recevoir des équipements, notamment électriques, de ladite motocyclette, en particulier une optique de phare avant (38) et/ou un afficheur (42) et/ou des clignotants (44), ce boîtier comprenant également des moyens (28, 30, 34, 36) de fixation du corps creux (2) sur la fourche avant (54, 56, 58) de la motocyclette.

2. Boîtier selon la revendication 1, **caractérisé en ce que** le corps creux (2) est réalisé d'un seul tenant, en étant en particulier réalisé en une matière plastique, telle que du polyéthylène.

3. Boîtier selon la revendication 1 ou 2, **caractérisé en ce que** les moyens de fixation du corps creux (2) sont propres à conférer un caractère amortissant à la fixation de ce corps creux par rapport à la fourche avant de la motocyclette.

4. Boîtier selon l'une quelconque des revendications précédentes, **caractérisé en ce que** ce boîtier comporte des premiers moyens (28) de fixation du corps creux (2) sur un premier emplacement de la fourche avant de la motocyclette, ainsi que des seconds moyens (30, 34, 36) de fixation du corps creux (2) sur un second emplacement de la fourche avant de la motocyclette.

5. Boîtier selon les revendications 3 et 4, **caractérisé en ce que** les premiers moyens de fixation comprennent au moins un tampon amortisseur (28), réalisé en un matériau souple, qui est propre à être coincé sur au moins une plage de réception (12), formée sur la face supérieure (2₃) du corps creux (2).

6. Boîtier selon les revendications 3 et 4, **caractérisé en ce que** les seconds moyens de fixation comprennent une vis (30), s'étendant au travers d'une patte inférieure (24) du corps creux (2), un contre écrou (34) monté sur cette vis, ainsi qu'un ressort (36) interposé entre ce contre écrou et la paroi en regard de ladite patte (24).

7. Ensemble prêt à monter (100) pour fourche avant de motocyclette, comprenant un boîtier (1) conforme à l'une quelconque des revendications précédentes, ainsi que différents équipements, notamment électriques, de ladite motocyclette, en particulier une optique de phare avant (38) et/ou un afficheur (42) et/ou des clignotants (44), chacun desdits équipements étant reçu dans un logement de réception correspondant (6, 14, 22), ménagé dans le corps creux (2) du boîtier (1).

8. Ensemble selon la revendication 7, **caractérisé en ce que** chaque équipement est pourvu d'un organe conducteur (38', 42', 44'), alors qu'il est prévu un relais (48) de connexion desdits organes conducteurs, ce relais (48) étant pourvu d'un organe conducteur de sortie (50), s'étendant en dehors du corps creux (2).

9. Motocyclette comprenant un châssis comportant une fourche (54, 56, 58), ainsi qu'un ensemble prêt à monter (100) conforme à l'une des revendications 7 ou 8, cet ensemble étant monté sur ladite fourche avant.

10. Motocyclette selon la revendication 9, comprenant un ensemble prêt à monter selon la revendication 7 ou 8, qui est pourvu d'un boîtier selon la revendication 5, **caractérisée en ce que** ladite fourche avant comprend une traverse supérieure (56) pourvue de deux plots (60), et chaque plot coopère avec une partie annulaire (28₁) d'un tampon amortissant correspondant (28).

11. Motocyclette selon la revendication 9 ou 10, comprenant un ensemble selon la revendication 7 ou 8, qui est pourvu d'un boîtier selon la revendication 6, **caractérisée en ce que** ladite fourche avant comprend une traverse inférieure (58) dans laquelle est ménagé un taraudage (62), ladite vis (30) étant vissée dans ce taraudage.

12. Procédé de fabrication de la motocyclette selon l'une des revendications 9 à 11, dans lequel on place chaque équipement (38, 42, 44) dans un logement correspondant (6, 14, 22), de manière à former ledit ensemble prêt à monter (100), et on monte ledit ensemble (100) sur la fourche avant (24, 56, 58) de la motocyclette.
